# EUROPEAN PATENT SPECIFICATION

(11) **EP 4 250 463 B1**
(45) Date of publication and mention of the grant of the patent: **01.04.2026**
(21) Application number: 22781371.4
(22) Date of filing: 04.02.2022
(51) Int. Cl.: H01M 50/503, H01M 50/569, H01M 50/211

(54) **BATTERY MODULE AND BATTERY PACK COMPRISING SAME**
BATTERIEMODUL UND BATTERIEPACK DAMIT
MODULE DE BATTERIE ET BLOC-BATTERIE LE COMPRENANT

(30) Priority: 29.03.2021 KR 20210040650
(43) Date of publication of application: 27.09.2023
(73) Proprietor: LG Energy Solution, Ltd., Seoul 07335 (KR)
(72) Inventor: KIM, Tae Geun, Daejeon 34122 (KR); AN, Hyuk, Daejeon 34122 (KR); OH, Jong Ryeol, Daejeon 34122 (KR)
(74) Representative: Goddar, Heinz J.
(86) International application number: PCT/KR2022/001750
(87) International publication number: WO 2022/211250

(56) References cited:
- EP-A1- 3 761 393
- JP-A- 2017 084 465
- KR-A- 20150 050 314
- KR-A- 20190 105 856
- KR-A- 20200 030 225
- KR-A- 20200 080 074
- US-A1- 2019 198 952
- US-A1- 2020 243 817

## Description

### [TECHNICAL FIELD]

### Cross Citation with Related Application(s)

This application claims the benefit of Korean Patent Application No. 10-2021-0040650 filed on March 29, 2021 with the Korean Intellectual Property Office.

The present disclosure relates to a battery module and a battery pack including the same, and more particularly to a battery module that includes a battery cell having an electrode lead with wide width, and a battery pack including the same.

### [BACKGROUND]

In modern society, as portable devices such as a mobile phone, a notebook computer, a camcorder and a digital camera has been daily used, the development of technologies in the fields related to mobile devices as described above has been activated. In addition, chargeable/dischargeable secondary batteries are used as a power source for an electric vehicle (EV), a hybrid electric vehicle (HEV), a plug-in hybrid electric vehicle (P-HEV) and the like, in an attempt to solve air pollution and the like caused by existing gasoline vehicles using fossil fuel. Therefore, the demand for development of the secondary battery is growing.

Currently commercialized secondary batteries include a nickel cadmium battery, a nickel hydrogen battery, a nickel zinc battery, and a lithium secondary battery. Among them, the lithium secondary battery has come into the spotlight because they have advantages, for example, hardly exhibiting memory effects compared to nickel-based secondary batteries and thus being freely charged and discharged, and having very low self-discharge rate and high energy density.

Such lithium secondary battery mainly uses a lithium-based oxide and a carbonaceous material as a cathode active material and an anode active material, respectively. The lithium secondary battery includes an electrode assembly in which a cathode plate and an anode plate, each being coated with the cathode active material and the anode active material, are arranged with a separator being interposed between them, and a battery case which seals and houses the electrode assembly together with an electrolytic solution.

Generally, the lithium secondary battery may be classified based on the shape of the exterior material into a can-type secondary battery in which the electrode assembly is mounted in a metal can, and a pouch-type secondary battery in which the electrode assembly is mounted in a pouch of an aluminum laminate sheet.

In the case of a secondary battery used for small-sized devices, two to three battery cells are arranged, but in the case of a secondary battery used for a middle- or large-sized device such as an automobile, a battery module in which a large number of battery cells are electrically connected is used. In such a battery module, a large number of battery cells are connected to each other in series or parallel to form a cell assembly, thereby improving capacity and output. Further, one or more battery modules can be mounted together with various control and protection systems such as a BMS (battery management system) and a cooling system to form a battery pack.

JP 2017 084465 A describes a battery pack including terminal portions for voltage detection, and flat plate type bus bars which are arranged to face the tip portions of electrode tabs of different single batteries and electrically connecting the tip portions. A bus bar cover is fitted to a battery group and formed of an insulating material covering the bus bars. The bus bar cover includes voltage detecting elements which are joined to terminal portions for voltage detection to detect the voltages of single cells, holding units that hold the voltage detecting elements at the positions where the voltage detecting elements are arranged at the terminal portions for voltage detection while fitted to the battery group, and opening portions which are formed to penetrate in the thickness direction of the bus bar cover and face the joint portions between the voltage detecting elements and the terminal portions for voltage detection.

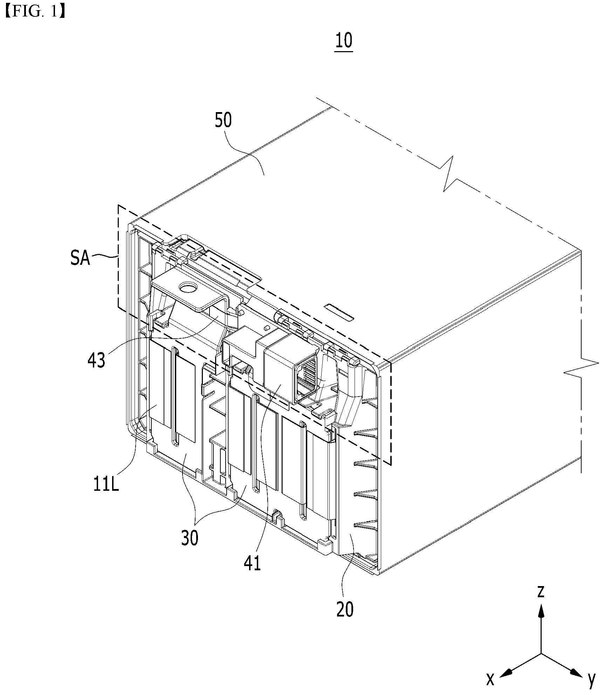

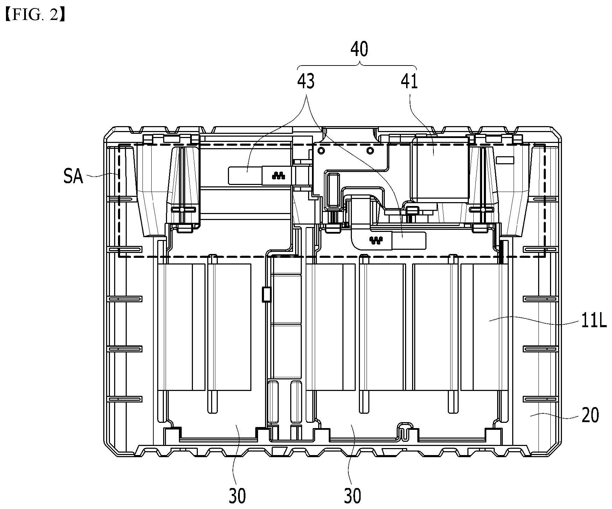

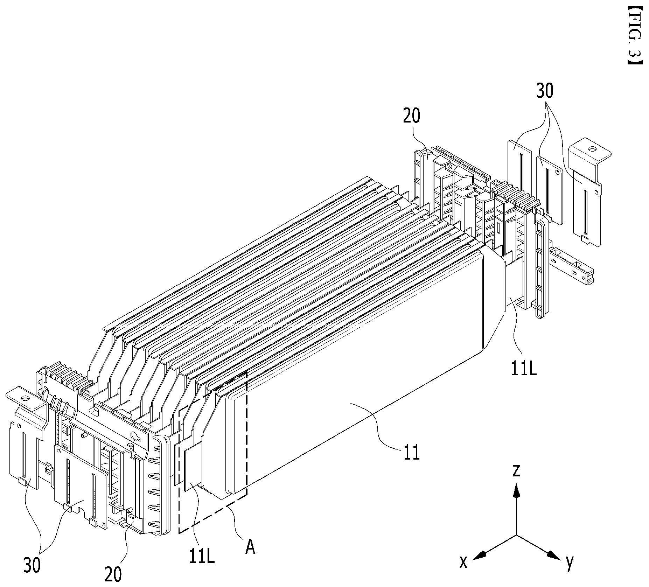

Fig. 1 is a partial perspective view showing the inside of a conventional battery module. Fig. 2 is a plan view of the battery module of Fig. 1 as viewed from the front. Fig. 3 is an exploded perspective view which shows battery cells and a busbar frame included in the battery module of Fig. 1. In particular, in Fig. 3, illustration of the module frame 50 of Fig. 1 is omitted.

Referring to Figs. 1 to 3, the conventional battery module 10 includes a plurality of battery cells 11 and a busbar 30 for electrical connection between the battery cells 11. Specifically, the busbar 30 may be mounted on a busbar frame 30, and the electrode lead 11L of the battery cell 11 is bent after passing through a slit formed in the busbar frame 20, and can be joined with the busbar 30.

Meanwhile, the busbar frame 20 can be mounted with a sensing assembly 40 including a module connector 41. In particular, the sensing assembly 40 including the module connector 41 may be mounted on the upper end of the busbar frame 20. Voltage information of the battery cell 11 can be transmitted to an external BMS (Battery Management System) through the module connector 41. For this purpose, the joining member 43 connected with the module connector 41 may be joined to the busbar 30 to which the electrode lead 11L is joined.

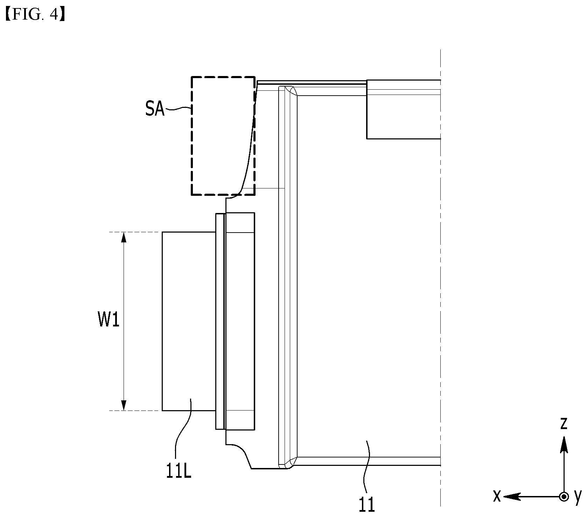

At this time, the electrode lead 11L and the joining member 43 may be joined to the outer surface of the busbar 30. The joining method is not particularly limited, and weld joining can be used as an example. The electrode lead 11L and the joining member 43 can be located on the same side with respect to the busbar 30 and joined together. Thereby, since it is necessary to provide an area to which the joining member 43 can be joined, the width of the electrode lead 11L cannot be greatly increased. This will be described in detail with reference to Fig. 4.

Fig. 4 is a partial view which enlarges and shows a section "A" of Fig. 3.

Referring to Figs. 1 to 4, since the outer surface of the busbar 30 must be provided with an area to which the joining member 43 can be joined in addition to the electrode lead 11L, the width W1 of the electrode lead 11L cannot be greatly increased. Here, the width W1 of the electrode lead 11L refers to a length in the z-axis direction with respect to the electrode lead 11L. That is, the so-called sensing area SA should be provided on the electrode lead 11L, and due to the sensing area SA, the width W1 of the electrode lead 11L is limited. The sensing area SA collectively refers to an area in which the sensing assembly 40 including the module connector 41 is located and an area in which the joining member 43 joined to the module connector 41 is attached to the busbar 30.

In recent years, interest in battery modules and battery packs having excellent quick charging performance is growing. However, as the quick charging performance is increased, the battery cells included in the battery module are more vulnerable to heat generation than before. In particular, the electrode lead portion of the battery cell generates a large amount of heat during repeated charging and discharging.

As one of the methods to solve the problem of heat generation of the battery cells, an attempt was made to increase the number of electrode leads of the battery cells than before, thereby reducing the resistance of the battery cells and reducing the amount of heat generation. However, as described above, the conventional battery module 10 has a limit in the width W1 of the electrode lead 11L by the sensing area SA, which may cause a problem that it is difficult to greatly increase the width W1 of the electrode lead 11L.

Therefore, there is a need to develop a battery module having a novel connection structure that can increase the width of the electrode lead.

### [DETAILED DESCRIPTION OF THE INVENTION]

### [Technical Problem]

It is an object of the present disclosure to provide a battery module having a novel connection structure that can increase the width of the electrode lead in order to reduce the amount of heat generation, and a battery pack including the same.

However, the problem to be solved by the embodiments of the present disclosure is not limited to the above-described problems, and can be variously expanded within the scope of the technical idea included in the present disclosure.

### [Technical Solution]

The present invention is defined according to the appended independent claim(s). Particular embodiments are given by the additional features of the appended dependent claims. According to one aspect of the present disclosure, there is provided a battery module comprising: a battery cell stack in which a plurality of battery cells including electrode leads are stacked; a busbar frame located on one surface of the battery cell stack in a direction in which the electrode leads protrude; a busbar mounted on the busbar frame; and a sensing assembly mounted on the busbar frame and including a joining member, wherein a first surface of the busbar and the electrode lead are joined, and a second surface of the busbar and the joining member are joined, and wherein the first surface and the second surface are surfaces facing each other.

The busbar frame is located between the busbar and the battery cell stack, and a slit is formed in the busbar frame. The electrode lead passes through the slit and is joined to the first surface of the busbar.

The second surface of the busbar may be a surface in contact with the busbar frame.

The busbar frame may be located between the sensing assembly and the battery cell stack, and the joining member of the sensing assembly may be located between the busbar and the busbar frame.

A through hole may be formed in a portion of the busbar frame corresponding to a portion where the joining member and the second surface are joined.

The busbar frame may include a mounting part on which the busbar is located. The mounting part may have a shape that is recessed from a reference surface in the direction in which the busbar is located, and may have a shape that protrudes from a reference surface in the direction in which the battery cell stack is located.

The busbar and the mounting part may be formed in plural numbers, and a slit through which the electrode lead passes may be formed between the mounting parts.

In the surface of the busbar frame in the direction in which the battery cell stack is located, the spacing between adjacent mounting parts may gradually widen as it goes in the direction in which the battery cell stack is located.

The sensing assembly may further comprise a module connector; and a connection cable that connects the module connector and the joining member.

The module connector and the connection cable may be located at an upper end of the busbar frame.

### [Advantageous Effects]

According to embodiments of the present disclosure, by connecting the rear surface of the busbar with the sensing assembly, an area where the electrode lead and the busbar are joined can be increased.

Therefore, the width of the electrode lead can be greatly increased, so that the resistance and the amount of heat generation of the battery cell can be reduced.

The effects of the present disclosure are not limited to the effects mentioned above and additional other effects not described above will be clearly understood from the detailed description and the appended drawings by those skilled in the art.

### [BRIEF DESCRIPTION OF THE DRAWINGS]

Fig. 1 is a partial perspective view showing the inside of a conventional battery module;
Fig. 2 is a plan view of the battery module of Fig. 1 as viewed from the front;
Fig. 3 is an exploded perspective view which shows battery cells and a busbar frame included in the battery module of Fig. 1;
Fig. 4 is a partial view which enlarges and shows a section "A" of Fig. 3;
Fig. 5 is an exploded perspective view which shows a battery module according to an embodiment of the present disclosure;
Fig. 6 is a perspective view which shows a battery cell included in the battery module of Fig. 5;
Fig. 7 is a perspective view which shows a busbar frame, a busbar, and a sensing assembly included in the battery module of Fig. 5;
Fig. 8 is a partial perspective view which enlarges and shows the busbar and the sensing assembly of Fig. 7;
Fig. 9 is a perspective view which shows a process in which an electrode lead of a battery cell is joined to a busbar;
Fig. 10 is a perspective view which shows a joining member according to an embodiment of the present disclosure;
Fig. 11 is a partial view which enlarges and shows a section "B" of Fig. 5;
Fig. 12 is a partial cross sectional view which shows a cross section taken along the cutting line C-C' of Fig. 5;
Fig. 13 is a perspective view showing a state in which the bus bar frame of Fig. 7 is turned upside down; and
Fig. 14 is a partial view which enlarges and shows a section "D" of Fig. 13.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and like reference numerals designate like elements throughout the description.

Further, in the drawings, the size and thickness of each element are arbitrarily illustrated for convenience of description, and the present disclosure is not necessarily limited to those illustrated in the drawings. In the drawings, the thickness of layers, areas, etc. are exaggerated for clarity. In the drawings, for convenience of description, the thicknesses of some layers and areas are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means arranged on or below a reference portion, and does not necessarily mean being arranged on the upper end of the reference portion toward the opposite direction of gravity.

Further, throughout the description, when a portion is referred to as "including" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

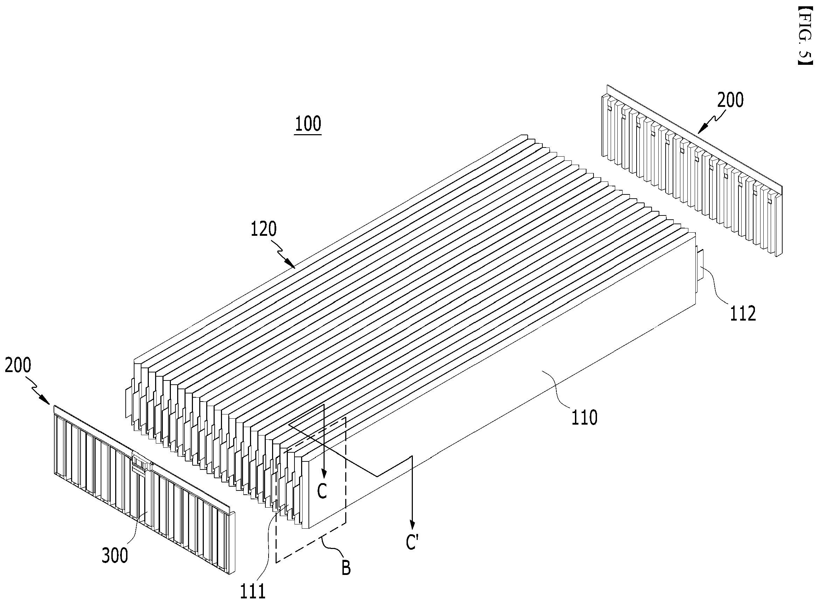

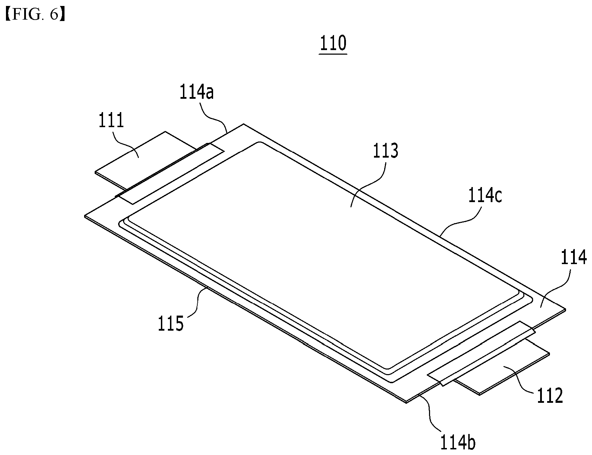

Fig. 5 is an exploded perspective view which shows a battery module according to an embodiment of the present disclosure. Fig. 6 is a perspective view which shows a battery cell included in the battery module of Fig. 5.

Referring to Figs. 5 and 6, a battery module 100 according to an embodiment of the present disclosure includes a battery cell stack 120 in which a plurality of battery cells 110 including electrode leads 111 and 112 are stacked, and a busbar frame 200 located on one surface of the battery cell stack 120 in a direction in which the electrode leads 111 and 112 protrude. The battery cell stack 120 and the busbar frame 200 may be housed in a module frame (not shown) although not specifically illustrated. Such a module frame may include a metal material having a predetermined strength so as to protect the battery cell stack 120, the busbar frame 200, and other electrical components from the outside.

The battery cell 110 is preferably a pouch-type battery cell, and can be formed in a rectangular sheet-like structure. For example, the battery cell 110 according to the present embodiment has a structure in which two electrode leads 111 and 112 face each other and protrude from one end part 114a and the other end part 114b of the cell body 113, respectively. That is, the battery cell 110 includes electrode leads 111 and 112 that are protruded in mutually opposite directions. More specifically, the electrode leads 111 and 112 are connected to an electrode assembly (not shown), and are protruded from the electrode assembly (not shown) to the outside of the battery cell 110.

Meanwhile, the battery cell 110 can be produced by joining both end parts 114a and 114b of a cell case 114 and one side part 114c connecting them in a state in which an electrode assembly (not shown) is housed in a cell case 114. In other words, the battery cell 110 according to the present embodiment has a total of three sealing parts, wherein the sealing parts have a structure that is sealed by a method such as heat-sealing, and the remaining other side part may be composed of a connection part 115. The cell case 114 may be composed of a laminated sheet including a resin layer and a metal layer.

Such a battery cell may be formed in plural numbers, and the plurality of battery cells 110 can be stacked so as to be electrically connected to each other, thereby forming a battery cell stack 120. Particularly, as shown in Fig. 5, the plurality of battery cells 110 can be stacked along the y-axis direction. Thereby, the electrode leads 111 and 112 may be protruded in vertical directions (x-axis direction and -x-axis direction), respectively. Although not specifically illustrated, an adhesive member may be located between the battery cells 110. Therefore, the battery cells 110 can be adhered to each other to form the battery cell stack 120.

The busbar frame 200 may be located on one surface of the battery cell stack 120 in the direction in which the electrode leads 111 and 112 protrude. Further, the busbar frame 200 may be located on the other side of the battery cell stack 120 in the direction in which the electrode leads 111 and 112 protrude. That is, the busbar frame 200 may be located on each of the front and rear surfaces of the battery cell stack 120.

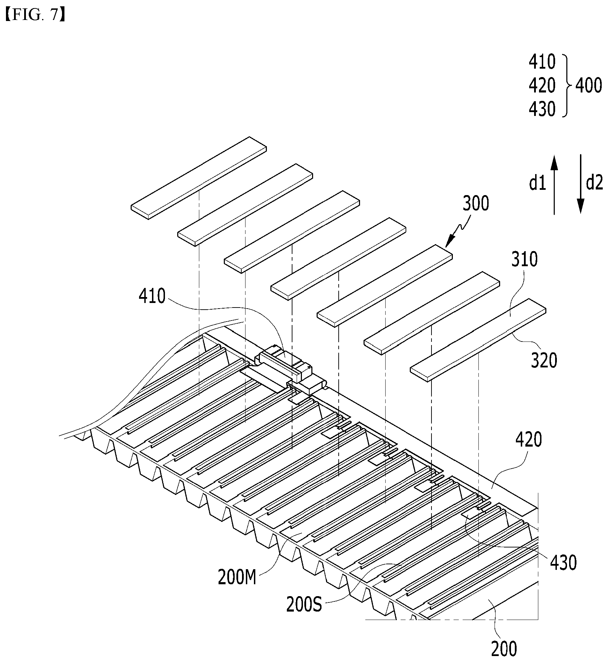

Below, a busbar and a busbar frame according to the present embodiment will be described in detail with reference to Figs. 7 to 9.

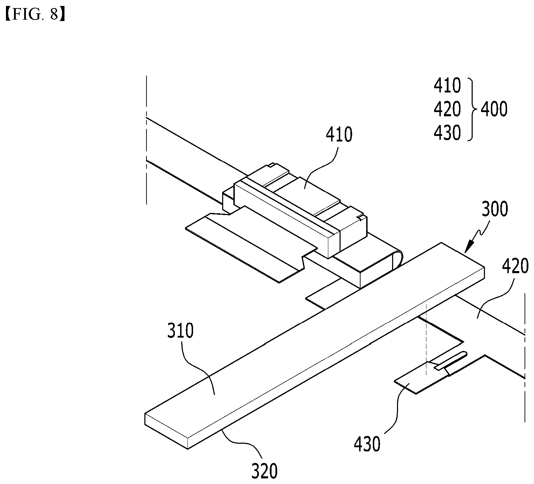

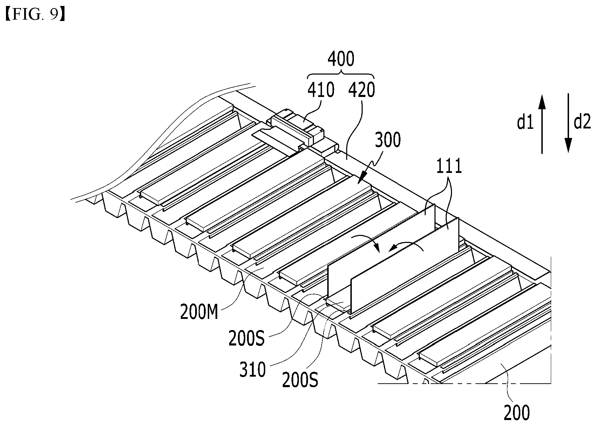

Fig. 7 is a perspective view which shows a busbar frame, a busbar, and a sensing assembly included in the battery module of Fig. 5. Fig. 8 is a partial perspective view which enlarges and shows the busbar and the sensing assembly of Fig. 7. Fig. 9 is a perspective view which shows a process in which an electrode lead of a battery cell is joined to a busbar. Particularly, for convenience of explanation, Fig. 9 shows only two electrode leads for convenience of explanation, and omits illustration of other parts of the battery cell except for the electrode leads.

Referring to Fig. 5 and Figs. 7 to 9, the battery module 100 according to the present embodiment includes a busbar 300 and a sensing assembly 400 mounted on the busbar frame 200. The first surface 310 of the busbar 300 and the electrode leads 111 and 112 are joined together, and the second surface 320 of the busbar 300 and the joining member 430 of the sensing assembly 400 are joined together. The first surface 310 and the second surface 320 of the busbar 300 are surfaces facing each other. That is, the first surface 310 may be a front surface of the busbar 300, and the second surface 320 may be a rear surface of the busbar 300.

A busbar frame 200 is be located between the busbar 300 and the battery cell stack 120. In other words, the busbar 300 may be mounted on a surface of the busbar frame 200 opposite to the surface facing the battery cell stack 120. A slit 200S is formed in the busbar frame 200. As shown in Fig. 9, the electrode lead 111 of the battery cell is joined to the first surface 310 of the busbar 300 after passing through the slit 200S. The electrode lead 111 of one battery cell and the electrode lead 111 of another battery cell can respectively pass through the slit 200S and then be bent toward any one busbar 300. At least two battery cells can be electrically connected via such a busbar 300.

The first surface 310 of the busbar 300 is a surface to which the electrode leads 111 and 112 are joined, and the second surface 320 of the busbar 300 may be a surface in contact with the busbar frame 200.

Meanwhile, the sensing assembly 400 according to the present embodiment is for a LV (low voltage) connection, wherein the LV connection means a sensing connection that senses and controls the voltage of the battery cell. Voltage information and temperature information of the battery cell 110 can be measured through the sensing assembly 400 and transmitted to an external BMS (Battery Management System).

Such a sensing assembly 400 may include a module connector 410, a connection cable 420, and a joining member 430 .

The module connector 410 may be configured so as to transmit and receive signals to and from an external controller in order to control the plurality of battery cells 110.

The connection cable 420 is a member that connects the module connector 410 and the joining member 430, and may be a flexible printed circuit board (FPCB) or a flexible flat cable (FFC). The module connector 410 and the connection cable 420 may be located at the upper end of the busbar frame 200.

The joining member 430 includes a metal material having battery conductivity, and is joined to the second surface 320 of the busbar 300.

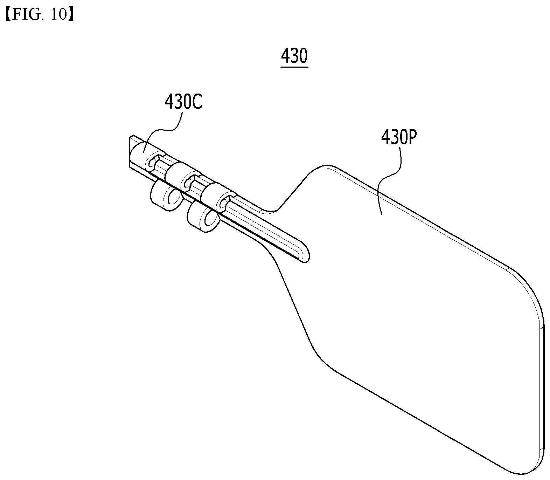

Fig. 10 is a perspective view which shows a joining member according to an embodiment of the present disclosure.

Referring to Fig. 10, the joining member 430 according to an embodiment of the present disclosure is configured such that one side 430P is joined to the second surface 320 of the busbar 300, and the other side 430C is connect to the connection cable 420. Specifically, one side 430P of the joining member 430 may be formed in a plate shape, and can be joined by a method such as welding after being in close contact with the second surface 320 of the busbar 300. Meanwhile, the other side 430C of the joining member 430 can be bent after passing through the connection cable 420, thereby being coupled with the connection cable 420.

Voltage information about the plurality of battery cells 110 can be sequentially passed through the joining member 430, the connection cable 420, and the module connector 410, and transmitted to an external BMS (Battery Management System). That is, the sensing assembly 400 may detect and control phenomena such as overvoltage, overcurrent, and overheating of each battery cell 110.

Referring to Fig. 5 and Figs. 7 to 9 again, the busbar frame 200 may be located between the sensing assembly 400 and the battery cell stack 120. In other words, the sensing assembly 400 may be mounted on a surface of the busbar frame 200 opposite to the surface facing the battery cell stack 120. Further, a joining member 430 of the sensing assembly 400 may be located between the busbar 300 and the busbar frame 200. As described above, the joining member 430 can be joined to the second surface 320 of the busbar 300.

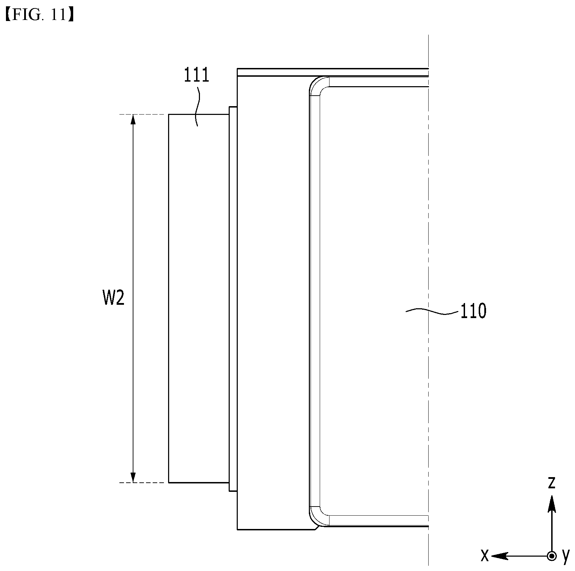

In summary, the electrode leads 111 and 112 and the joining member 430 are respectively joined to the opposing surfaces of the busbar 300, that is, the first surface 310 and the second surface 320. Advantages of the joining relationship according to the present embodiment will be described below in comparison with the conventional battery module 10 with reference to FIG. 11 and the like. Fig. 11 is a partial view which enlarges and shows a section "B" of Fig. 5.

First, as shown in Fig. 4, in the conventional battery module 10, it is difficult to increase the width W1 of the electrode lead 11L due to the sensing area SA. Meanwhile, as shown in Figs. 7 and 9, in the battery module 100 according to the present embodiment, the joining member 430 and the electrode lead 111 are joined to the busbar 300 while being located opposite to each other. Therefore, it is not necessary to reduce the width W2 of the electrode lead 111 for the purpose of providing an area where the joining member 430 and the busbar 300 can be joined. The width W2 of the electrode lead 111 can be greatly increased as compared with the conventional one. Here, the width W2 of the electrode lead 111 refers to a length in the z-axis direction with respect to the electrode lead 111. Since the battery module 100 according to the present embodiment can greatly increase the width W2 of the electrode lead 111, it has the advantage that the resistance and the amount of heat generation of the battery cell 110 can be reduced.

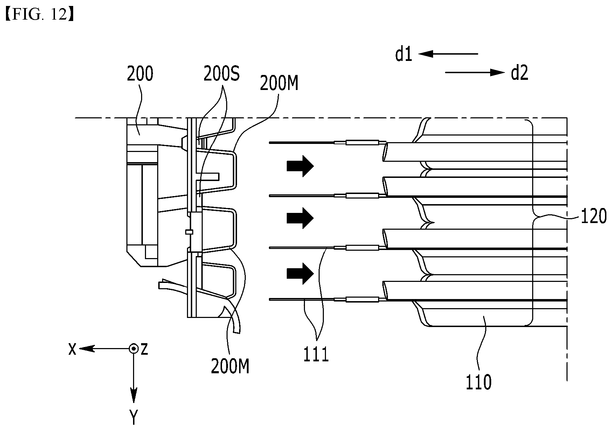

Next, the mounting part according to the present embodiment will be described in detail with reference to Fig. 12 and the like.

Fig. 12 is a partial cross sectional view which shows a cross section taken along the cutting line C-C' of Fig. 5.

Referring to Figs. 5, 7 and 9 and 12, the busbar frame 200 according to the present embodiment includes a mounting part 200M in which the busbar 300 is located. A plurality of busbars 300 can be mounted on the busbar frame 200, and accordingly, the mounting part 200M may also be formed in plural numbers. The mounting part 200M according to the present embodiment has a shape that is recessed from a reference surface in the direction d1 in which the busbar 300 is located, and has a shape that protrudes from a reference surface in the direction d2 in which the battery cell stack 120 is located. That is, the mounting part 200M may be in the form of a basket that is opened in the direction d1 in which the busbar 300 is located.

The busbar frame 200 preferably includes an electrically insulating material, and as an example, a plastic material can be used. The weld joining when joining between the electrode lead 111 and the busbar 300, particularly, the weld joining using a laser, can be used. Considering the material of the busbar frame 200, damage may occur to the busbar frame 200 due to the weld joining. Therefore, the present embodiment is configured such that the shape of the mounting portion 200M is indented based on the plane in the direction d1 in which the busbar 300 is located. Since the mounting part 200M is separated from the area where welding is performed, it can prevent the direct application of damage. Further, the busbar frame 200 may be an injection molded product manufactured by injection molding. At this time, if the inner space is all filled, shrinkage may occur. In the present embodiment, the mounting part 200M is configured in a recessed form to form an empty space.

Meanwhile, as an example, the busbar 300 may be placed in the shape of being inserted into the empty space, but if the busbar 300 is completely inserted, it may cause a problem in the welding process with the electrode lead 111. Therefore, it is preferable that the busbar 300 slightly protrudes in the d1 direction instead of being completely inserted as shown in Fig. 9.

Meanwhile, as described above, the busbar 300 and the mounting part 200M may be formed in plural numbers. A slit 200S through which the electrode lead 111 may pass may be formed between the mounting parts 200M.

At this time, the mounting part 200M may have a shape that protrudes from a reference surface in the direction d2 in which the battery cell stack 120 is located, as described above. Further, in the surface of the busbar frame 200 in the direction d2 in which the battery cell stack 120 is located, the spacing between adjacent mounting parts 200M gradually widen as it goes in the direction d2 in which the battery cell stack 120 is located. As such a mounting part 200M has the shape as described above, the electrode lead 111 can easily pass between the mounting parts 200M to insert into the slits 200S when the busbar frame 200 is arranged on one surface of the battery cell stack 120. That is, the protruding mounting parts 200M may serve as a kind of guide so that the electrode lead 111 can easily pass through the slit 200S.

Meanwhile, when the busbar frame 200 is arranged on one surface of the battery cell stack 120, the protruding portion of the mounting part 200M can fill a space between the electrode leads 111 of the adjacent battery cells 110.

The battery cell 110 may generate gas inside due to a decomposition reaction of materials and a plurality of side reactions. At this time, in the case of the battery cell 110, which is a pouch-type secondary battery, a swelling phenomenon may occur in which the cell case 114 (see Fig. 6) of the laminated sheet is stretched by the gas generated inside and swollen into a convex shape.

However, when the battery cell 110 constitutes the battery cell stack 120, the portion of the cell body 113 of the battery cell 110 hardly swells because the battery cells 110 are pressed together. Instead, the gas may be concentrated in regions of one end 114a and the other end 114b in the direction in which the electrode leads 111 and 112 protrude. Eventually, the initial sealing of the region of one end 114a and the other end 114b can be released, whereby high-temperature heat, gas, and flame generated from the plurality of battery cells 110 may be discharged in a direction in which the electrode leads 111 and 112 protrude.

Since the mounting part 200M of the busbar frame 200 according to the present embodiment is arranged so as to fill the space between the electrode leads 111 of the adjacent battery cells 110, it is possible to prevent gas from being concentrated in the region of the one end 114a and the other end 114b of the battery cell 110. Further, the mounting part 200M can restrict the discharge of high-temperature heat or gas generated inside the battery cell 110 in the direction in which the busbar frame 200 is located.

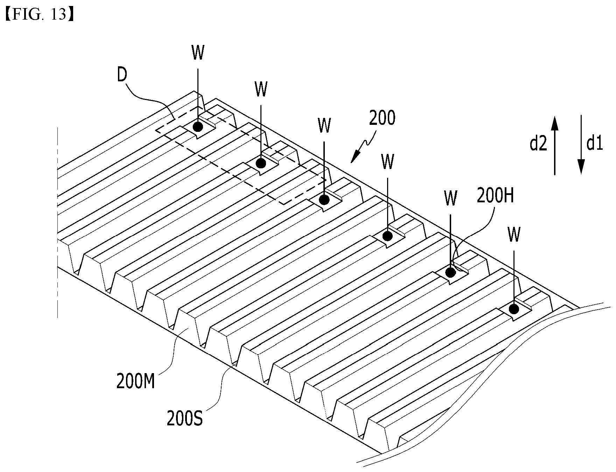

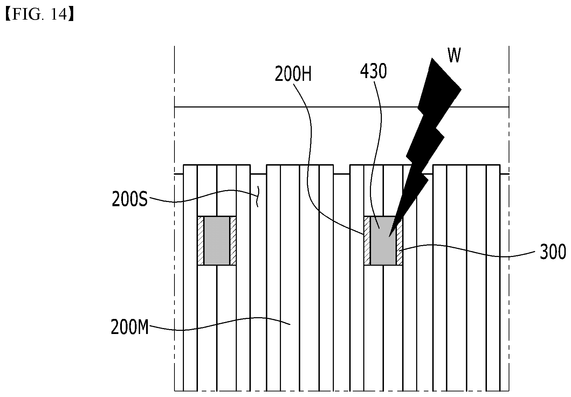

Next, the through hole 200H formed in the busbar frame 200 according to the present embodiment will be described in detail with reference to Figs. 13 and 14.

Fig. 13 is a perspective view showing a state in which the bus bar frame of Fig. 7 is turned upside down. Fig. 14 is a partial view which enlarges and shows a section "D" of Fig. 13.

Referring to Figs. 7, 8, 13 and 14, a through hole 200H may be formed in a portion of the busbar frame 200 corresponding to a portion where the joining member 430 and the second surface 320 of the busbar 300 are joined. The joining member 430 and the second surface 320 can be joined by a method such as welding W through such a through hole 200H. Before the electrode lead 111 and the busbar 300 are joined, the joining member 430 and the busbar 300 can be first joined through the through hole 200H. If the through hole 200H is not formed, the joining member 430 is covered with the busbar 300, which may make it difficult to perform a weld joining at an accurate position.

The terms representing directions such as the front side, the rear side, the left side, the right side, the upper side, and the lower side have been used in embodiments of the present disclosure, but the terms used are provided simply for convenience of description and may become different according to the position of an object, the position of an observer, or the like.

The one or more battery modules according to embodiments of the present disclosure described above can be mounted together with various control and protection systems such as BMS (Battery Management System), BDU (Battery Disconnect Unit), and a cooling system to form a battery pack.

The battery module or the battery pack can be applied to various devices. For example, it can be applied to vehicle means such as an electric bike, an electric vehicle, and a hybrid electric vehicle, and may be applied to various devices capable of using a secondary battery, without being limited thereto.

The present disclosure has been described in detail with reference to exemplary embodiments thereof, but the scope of the present disclosure is defined in the following claims.

### [Description of Reference Numerals]

100: battery module
120: battery cell stack
200: busbar frame
300: busbar
400: sensing assembly

## Claims

1. A battery module comprising:
a battery cell stack (120) in which a plurality of battery cells (110) including electrode leads (111) are stacked;
a busbar frame (200) located on one surface of the battery cell stack (120) in a direction in which the electrode leads (111) protrude;
a busbar (300) mounted on the busbar frame (200); and
a sensing assembly (400) mounted on the busbar frame (200) and including a joining member (430),
wherein a first surface (310) of the busbar (300) and the electrode lead (111) are joined, and a second surface (320) of the busbar (300) and the joining member (430) are joined, and
wherein the first surface (310) and the second surface (320) are surfaces opposite to each other,
wherein the busbar frame (200) is located between the busbar (300) and the battery cell stack (120), a slit (200S) is formed in the busbar frame (200), and the electrode lead (111) passes through the slit and is joined to the first surface (310) of the busbar (300).

2. The battery module according to claim 1 wherein:
the second surface (320) of the busbar (300) is a surface in contact with the busbar frame (200).

3. The battery module according to claim 1 wherein:
the busbar frame (200) is located between the sensing assembly (400) and the battery cell stack (120), and
the joining member (430) of the sensing assembly (400) is located between the busbar (300) and the busbar frame (200).

4. The battery module according to claim 1 wherein:
a through hole (200H) is formed in a portion of the busbar frame (200) corresponding to a portion where the joining member (430) and the second surface (320) are joined.

5. The battery module according to claim 1 wherein:
the busbar frame (200) includes a mounting part (200M) on which the busbar (300) is located, and
the mounting part (200M) has a shape that is recessed from a reference surface in the direction in which the busbar (300) is located, and has a shape that protrudes from a reference surface in the direction in which the battery cell stack (120) is located.

6. The battery module according to claim 5, wherein:
the busbar (300) and the mounting part (200M) are formed in plural numbers, and
a slit (200S) through which the electrode lead (111) passes is formed between the mounting parts (200M).

7. The battery module according to claim 6, wherein:
in the surface of the busbar frame (200) in the direction in which the battery cell stack (120) is located, the spacing between adjacent mounting part (200M)s gradually widen as it goes in the direction in which the battery cell stack (120) is located.

8. The battery module according to claim 1 wherein:
the sensing assembly (400) further comprises a module connector (410) and a connection cable (420) that connects the module connector (410) and the joining member (430).

9. The battery module according to claim 8, wherein:
the module connector (410) and the connection cable (420) are located at an upper end of the busbar frame (200).

10. A battery pack comprising the battery module as set forth in claim 1.

## Patentansprüche

1. Batteriemodul aufweisend:
einen Batteriezellenstapel (120), in dem mehrere Batteriezellen (110), die Elektrodenleitungen (111) aufweisen, gestapelt sind;
einen Sammelschienenrahmen (200), der auf einer Oberfläche des Batteriezellenstapels (120) in einer Richtung angeordnet ist, in der die Elektrodenleitungen (111) vorstehen;
eine Sammelschiene (300), die auf dem Sammelschienenrahmen (200) montiert ist;
und
eine Erfassungsanordnung (400), die auf dem Sammelschienenrahmen (200) montiert ist und ein Verbindungselement (430) aufweist,
wobei eine erste Oberfläche (310) der Sammelschiene (300) und die Elektrodenleitung (111) verbunden sind, und eine zweite Oberfläche (320) der Sammelschiene (300) und das Verbindungselement (430) verbunden sind, und
wobei die erste Oberfläche (310) und die zweite Oberfläche (320) Oberflächen sind, die einander gegenüberliegen,
wobei der Sammelschienenrahmen (200) zwischen der Sammelschiene (300) und dem Batteriezellenstapel (120) angeordnet ist, ein Schlitz (200S) in dem Sammelschienenrahmen (200) ausgebildet ist, und die Elektrodenleitung (111) durch den Schlitz verläuft und mit der ersten Oberfläche (310) der Sammelschiene (300) verbunden ist.

2. Batteriemodul nach Anspruch 1, wobei:
die zweite Oberfläche (320) der Sammelschiene (300) eine Oberfläche in Kontakt mit dem Sammelschienenrahmen (200) ist.

3. Batteriemodul nach Anspruch 1, wobei:
der Sammelschienenrahmen (200) zwischen der Erfassungsanordnung (400) und dem Batteriezellenstapel (120) angeordnet ist, und
das Verbindungselement (430) der Erfassungsanordnung (400) zwischen der Sammelschiene (300) und dem Sammelschienenrahmen (200) angeordnet ist.

4. Batteriemodul nach Anspruch 1, wobei:
ein Durchgangsloch (200H) in einem Abschnitt des Sammelschienenrahmens (200) ausgebildet ist, der einem Abschnitt entspricht, wo das Verbindungselement (430) und die zweite Oberfläche (320) verbunden sind.

5. Batteriemodul nach Anspruch 1, wobei:
der Sammelschienenrahmen (200) ein Montageteil (200M) aufweist, auf dem die Sammelschiene (300) angeordnet ist, und
das Montageteil (200M) eine Form aufweist, die von einer Referenzoberfläche in der Richtung vertieft ist, in der die Sammelschiene (300) angeordnet ist, und eine Form aufweist, die von einer Referenzoberfläche in der Richtung vorsteht, in der der Batteriezellenstapel (120) angeordnet ist.

6. Batteriemodul nach Anspruch 5, wobei:
die Sammelschiene (300) und das Montageteil (200M) mehrfach ausgebildet sind, und
ein Schlitz (200S), durch den die Elektrodenleitung (111) verläuft, zwischen den Montageteilen (200M) ausgebildet ist.

7. Batteriemodul nach Anspruch 6, wobei:
in der Oberfläche des Sammelschienenrahmens (200) in der Richtung, in der der Batteriezellenstapel (120) angeordnet ist, sich der Abstand zwischen benachbarten Montageteilen (200M) allmählich erweitert, wenn er in die Richtung geht, in der der Batteriezellenstapel (120) angeordnet ist.

8. Batteriemodul nach Anspruch 1, wobei:
die Erfassungsanordnung (400) ferner einen Modulverbinder (410) und ein Verbindungskabel (420) aufweist, das den Modulverbinder (410) und das Verbindungselement (430) verbindet.

9. Batteriemodul nach Anspruch 8, wobei:
der Modulverbinder (410) und das Verbindungskabel (420) an einem oberen Ende des Sammelschienenrahmens (200) angeordnet sind.

10. Batteriepack aufweisend das Batteriemodul nach Anspruch 1.

## Revendications

1. Module de batterie comprenant :
un empilement de cellules de batterie (120) dans lequel une pluralité de cellules de batterie (110) comprenant des conducteurs d'électrode (111) sont empilées ;
un cadre de barre omnibus (200) situé sur une surface de l'empilement de cellules de batterie (120) dans une direction dans laquelle les conducteurs d'électrode (111) font saillie,
une barre omnibus (300) montée sur le cadre de barre omnibus (200) ; et
un ensemble de détection (400) monté sur le cadre de barre omnibus (200) et comprenant un élément de jonction (430),
une première surface (310) de la barre omnibus (300) et le conducteur d'électrode (111) étant joints, et une deuxième surface (320) de la barre omnibus (300) et l'élément de jonction (430) étant joints, et
la première surface (310) et la deuxième surface (320) étant des surfaces situées l'une en face de l'autre,
le cadre de barre omnibus (200) étant situé entre la barre omnibus (300) et l'empilement de cellules de batterie (120), une fente (200S) étant formée dans le cadre de la barre omnibus (200), et le conducteur d'électrode (111) passant à travers la fente et étant joint à la première surface (310) de la barre omnibus (300).

2. Module de batterie selon la revendication 1,
la deuxième surface (320) de la barre omnibus (300) étant une surface au contact du cadre de barre omnibus (200).

3. Module de batterie selon la revendication 1,
le cadre de barre omnibus (200) étant situé entre l'ensemble de détection (400) et l'empilement de cellules de batterie (120), et
l'élément de jonction (430) de l'ensemble de détection (400) étant situé entre la barre omnibus (300) et le cadre de barre omnibus (200).

4. Module de batterie selon la revendication 1,
un orifice traversant (200H) étant formé dans une partie du cadre de barre omnibus (200) correspondant à une partie où l'élément de jonction (430) et la deuxième surface (320) sont joints.

5. Module de batterie selon la revendication 1,
le cadre de barre omnibus (200) comprenant une pièce de montage (200M) sur laquelle se trouve la barre omnibus (300), et
la pièce de montage (200M) ayant une forme évidée d'une surface de référence dans la direction dans laquelle est située la barre omnibus (300), et ayant une forme faisant saillie d'une surface de référence dans la direction de l'emplacement de l'empilement de cellules de batterie (120).

6. Module de batterie selon la revendication 5,
la barre omnibus (300) et la pièce de montage (200M) étant formées en grand nombre, et
une fente (200S) par laquelle passe le conducteur de l'électrode (111) étant formée entre les pièces de montage (200M).

7. Module de batterie selon la revendication 6,
sur la surface du cadre barre omnibus (200), dans la direction où se trouve l'empilement de cellules de batterie (120), l'espacement entre la pièce de montage adjacente (200M) s'élargissant progressivement au fur et à mesure qu'il se dirige dans la direction dans laquelle se trouve l'empilement de cellules de batterie (120).

8. Module de batterie selon la revendication 1,
l'ensemble de détection (400) comprenant en outre un connecteur de module (410) et un câble de connexion (420) qui relie le connecteur du module (410) et l'élément de jonction (430).

9. Module de batterie selon la revendication 8,
le connecteur du module (410) et le câble de connexion (420) se trouvant à une extrémité supérieure du cadre de barre omnibus (200).

10. Bloc-batterie comprenant le module de batterie selon la revendication 1.
